# EUROPEAN PATENT APPLICATION

(11) **EP 1 170 953 A2**
(43) Date of publication of application: **09.01.2002**
(21) Application number: 01115018.2
(22) Date of filing: 20.06.2001
(51) Int. Cl.: H04N 7/18

(54) **Portable telephone, remote monitoring system, portable information terminal, and method for using the same**

(30) Priority: 03.07.2000 JP 2000200782; 18.07.2000 JP 2000217773
(71) Applicant: Pioneer Corporation, Meguro-ku, Tokyo (JP); Pioneer Design Corporation, Meguro-ku, Tokyo (JP)
(72) Inventor: Hirayama, Naofumi, Meguro-ku, Tokyo (JP); Tomono, Mizuki, Meguro-ku, Tokyo (JP); Nakatsuka, Yoshinori, Meguro-ku, Tokyo (JP); Arakawa, Mikiko, Iruma-shi, Saitama (JP); Kobayashi, Katsumi, Kawaguchi-shi, Saitama (JP)
(74) Representative: Manitz, Finsterwald & Partner GbR

(57) **Abstract**

Real-time images and audio are monitored from a remote place anytime at an arbitrary place with a portable telephone. The portable telephone comprises a display panel which can display a moving image, an image signal receiving part which receives an image signal sent over the mobile communication network N2, an image signal reproducing part which reproduces the image signal which has been received by this image signal receiving part and makes the display part display the reproduced image, and a permission signal sending part for sending a permission signal to permit an image-pickup part to output an image signal to the image-pickup part to be connected via the mobile communication network. According to another aspect, a portable information terminal is constructed so that the sender can easily send information of the place or surrounding view where he/she is, and comprises a sending/receiving part which sends/receives an image signal via the mobile communication network, a display panel which displays an image according to the received image signal, and a CCD camera which performs imaging and sends an image signal by the sending/receiving part. The view of the surrounding area is imaged by the CCD camera, the obtained image signal is sent to another portable telephone that is line-connected via the mobile communication network, and thus the picked-up image of the surrounding area is displayed on the display panel of the other portable telephone.

## Description

### BACKGROUND OF THE INVENTION

### 1. Field of the Invention

The present invention relates to a multi-functional portable telephone equipped with a display and a remote monitoring system using the same portable telephone. The present invention also relates to a portable information terminal which exchanges information over a mobile communication network and methods for using the same.

### 2. Description of Related Art

In general, as is often the case with people who are not at home, they have concerns about their homes during their absence.

For example, if people keep pets such as dogs and cats, there are cases where the owners want to know how their pet left at home spends time during the master's absence.

In order to deal with such cases, the use of a remote monitoring system may be considered so that the house is monitored. However, according to the conventional remote monitoring system, images of the object to be monitored are monitored at all times in an observation center or the like and the system cannot be used for the purpose that a family member sees an image showing his/her house in real time at any time at an unspecified place outside his/her house. Therefore, conventionally, there has been a demand to develop a method whereby people can easily monitor images of their homes during their absence.

In recent years, portable information terminals such as portable telephones or personal digital assistants (PDAs) and the like which perform exchanges of conversations and information using a mobile communication network have quickly become widespread and, in particular, portable telephones have become indispensable for young people as means of communication.

For example, when friends plan to meet each other in a downtown area, in the past it had been necessary to arrange the date, time, and place beforehand. However, with the spread of potable telephones, recently, a method for meeting has been frequently used, wherein friends meet at a meeting place on the appointed day while confirming the other's location to each other by their portable telephones.

However, even with this method for meeting while friends are confirming the other's location to each other by their portable telephones, if there is no landmark nearby to use as a guide or if one of them is at a place where the location cannot be easily specified, there is a case where he/she cannot explain the place where he/she is and they cannot easily meet.

Also, there is a case where the person is poor at explaining the place where he or she is or the person does not know the place where he or she is.

### OBJECTS AND SUMMARY OF THE INVENTION

The present invention has been developed to meet the aforementioned conventional requirements.

That is, it is an object of the present invention to make it possible to monitor real-time images and audio from a remote place anytime at an arbitrary place.

In order to achieve the above object, a portable telephone according to a first aspect of the present invention comprises: a display part which can display a moving image; an image signal receiving part which receives an image signal sent over a mobile communication network; an image signal reproducing part which reproduces the image signal which has been received by this image signal receiving portion and makes the display portion display the reproduced image, and a permission signal sending part for sending a permission signal to permit a image-pickup portion to output an image signal to the image-pickup portion to be connected via the mobile communication network.

A portable telephone according to the first aspect of the present invention is connected, for example, to an image-pickup part installed at a desirable place such as, for example, the user's house via a mobile communication network and permits this image-pickup part connected via the mobile communication network to output an image signal imaged by the image-pickup by sending a permission signal such as a tone signal indicating a password that has been set by the user beforehand from a permission signal sending portion to the image-pickup portion connected via the mobile communication network.

Then, the portable telephone receives the image signal sent from this image-pickup portion via communication networks by means of the image signal receiving part, reproduces the image signal by means of the image signal reproducing part, and makes the display part display the reproduced images.

As described above, according the first aspect of the invention, it becomes possible to monitor a real-time image and audio from a remote place via a mobile communication network anytime at an arbitrary place and it becomes possible for a person, for example, to see the state of his or her house easily and in real time while he or she is away.

Then, since monitoring of this image is performed by sending a permission signal such as a password set by the user, there is no danger of a third party's access to the image.

In order to achieve the above object, in addition to the construction according to the first aspect, a portable telephone according to a second aspect of the invention further comprises a decompressing portion for decompressing a compressed digital image signal which has been received by the image signal receiving portion, whereby even if a digital image signal to be sent from the image-pickup portion has been compressed when being sent, this digital image signal can be decompressed for displaying in the display portion.

In order to achieve the above object, a remote monitoring system by means of a portable telephone according to a third aspect of the present invention comprises a portable telephone and a monitoring camera device which is connected to this portable telephone via a mobile communication networka and sends an image signal obtained by imaging, wherein
the portable telephone comprises: a display portion which can display a moving image; an image signal receiving portion which receives an image signal sent over a mobile communication network; an image signal reproducing portion which reproduces the image signal which has been received by this image signal receiving portion and makes the display portion display the reproduced image; and a permission signal sending portion for sending a permission signal to permit the monitoring camera device to output an image signal to the monitoring camera device to be connected via the mobile communication network, wherein the monitoring camera device comprises:
an image pickup portion which is installed and oriented toward a desirable object to be monitored and an image signal sending permission portion which detects the permission signal to be sent from the permission signal sending portion of the portable telephone via the mobile communication network and permits sending of an image signal from the image-pickup portion to the portable telephone.

In terms of a remote monitoring system by means of a portable telephone according to the third aspect of the present invention, a monitoring camera device is installed at an arbitrary place desired by a user such as, for example, the user's house in a manner where an image-pickup part of the monitoring camera device is oriented toward, for example, a desirable object to be monitored in a room of the user's house where his or her pet or the like stays.

Then, the portable telephone is connected to this monitoring camera device via the mobile communication network and sends a permission signal such as a tone signal indicating a password that has been set by a user beforehand to the monitoring camera device thus connected via the mobile communication network.

Upon the permission signal being detected by the image signal sending permission portion, the monitoring camera device that has received this permission signal sends an image signal obtained through imaging of a desirable object to be monitored by the image-pickup portion to the potable telephone connected via the mobile communication network.

Then, the portable telephone receives the image signal sent from this image-pickup portion via communication networks by means of the image signal receiving portion, reproduces the image signal by means of the image signal reproducing portion, and makes a display portion display the reproduced image.

As described above, according the third aspect of the invention, it becomes possible to monitor a real-time image and audio from a remote place via the mobile communication network anytime at an arbitrary place and it becomes possible for a person, for example, to see the state of his/her house easily and in real time while he/she is away.

Then, since the monitoring camera device sends the image signal upon a condition that the permission signal such as a password set by a user is detected, there is no danger of a third party's access to the image.

In order to achieve the above object, in addition to the construction according to the third aspect, a remote monitoring system by means of a portable telephone according to a fourth aspect of the invention further comprises a compressing portion for compressing an image signal to be sent from the image pickup portion to the portable telephone, and whereby the time for sending the image signal from the monitoring camera device to the portable telephone can be shortened.

In order to achieve the above object, in addition to the construction according to the third aspect, a remote monitoring system by means of a portable telephone according to a fifth aspect of the invention further comprises a decompressing portion for decompressing a compressed image signal which has been received by the image signal receiving portion and whereby even a digital image signal to be sent from the image-pickup portion has been compressed when being sent, this digital image signal can be decompressed for displaying in the display portion.

The present invention has been developed further to extend the methods for using portable digital assistants as communication means and another object of the present invention is to make it possible for a person to easily inform of the place where he/she is or surrounding state by means of a portable digital assistant.

In order to achieve the above object, a portable information terminal according to a sixth aspect of the invention comprises: a sending/receiving portion which sends/receives an image signal via a mobile communication network; an image display portion which displays an image by the image signal received by this sending/receiving part; and an image-pickup part which performs imaging and sends an image signal obtained through the imaging by means of the sending/receiving part.

The portable information terminal according to the sixth aspect is line-connected to a terminal such as another portable information terminal equipped with an image display portion or a microcomputer via the mobile communication network.

Then, when a view around the place where the portable information terminal is located is imaged by the image-pickup portion, an image signal obtained by this imagepickup portion is sent by the sending/receiving portion to another portable information terminal and the like that has been line-connected, and the imaged view is displayed in the image display part of said another portable information terminal.

Also, when this portable information terminal receives an image signal showing a view from another portable information terminal and the like via the mobile communication network, based on such an image signal, the portable information terminal makes the image display portion display an image based on the image signal.

As described above, according to the sixth aspect of the present invention, it becomes possible to visually inform the receiver of the surroundings of the sender and therefore, for example, in a case where friends are meeting in a downtown area, in a condition where the portable information terminals which they carry are line-connected to each other via mobile communications networks, by imaging a surrounding view by means of an image-pickup portion of one portable information terminal and sending the image signal to the other portable information terminal, the sender can visually inform the receiver whom the sender is meeting of the location where the sender is.

Accordingly, even if there is no guide indicating where the sender is or if streets are complicated and explanation thereof is difficult for the sender, the sender can easily inform the receiver of the location where the sender is.

In particular, when it is difficult to only vocally explain the place and the like or when the sender is poor at explanation, it becomes very effective to provide the receiver with the above described images.

Furthermore, in addition to the method for using a portable information terminal as described above, this portable information terminal can be used in other methods. For example, when a person is involved in an accident, it can be used to image the scene of the accident for sending and when a person meets with disaster, it can be used to image the surrounding view for sending so that the receiver confirms the scene of the disaster.

Moreover, this portable information terminal can be used in still another method wherein when the sender wants to talk with the receiver at a distant place about a commodity that the sender wants to buy, the sender can image the commodity and send the image signal thereof.

In order to achieve the above object, in addition to the construction according to the sixth aspect, a portable information terminal according to a seventh aspect of the invention is characterized in that the image-pickup portion is a CCD camera, thus making it possible to image the surrounding view by means of a small-sized portable information terminal such as a portable telephone.

In order to achieve the above object, a method for using a portable information terminal according to an eighth aspect of the present invention uses a portable information terminal comprising a sending/receiving part which performs sending/receiving of an image signal via a mobile communication network, an image display part which displays an image by an image signal received by this sending/receiving part, and an image-pickup portion which performs imaging and sends an image signal obtained through imaging by means of the sending/receiving part; images the surrounding view by means of the image-pickup device; sends the image signal obtained through this imaging to another portable information terminal that is line-connected via the mobile communication network by means of a sending/receiving part; and makes the image of the surrounding view thus imaged to be displayed in an image displaying portion of another portable information terminal.

This method for using a portable information terminal according to an eighth aspect makes it possible for the sender to inform the receiver of the surrounding state and, for example, in a case where friends are meeting in a downtown area, in a condition where the portable information terminals which they carry are line-connected to each other via the mobile communication network, by imaging a surrounding view by means of an image-pickup part of one portable information terminal and sending the image signal to the other portable information terminal, the sender can visually inform the receiver whom the sender is meeting of the location where the sender is.

Accordingly, even if there is no guide indicating where the sender is or if streets are complicated and explanation thereof is difficult for the sender, the sender can easily inform the receiver of the location where the sender is.

In particular, when it is difficult to only vocally explain the place and the like or when the sender is poor at explanation, it becomes very effective to provide the receiver with the above described image.

Furthermore, in addition to the method for using a portable information terminal as described above, this portable information terminal can be used in other methods. For example, when a person is involved in an accident, it can be used to image the scene of the accident for sending and when a person meets with disaster, it can be used to image the surrounding view for sending so that the receiver confirms the scene of the disaster.

Moreover, this portable information terminal can be used in still another method wherein when the sender wants to talk with the receiver at a distant place about a commodity that the sender wants to buy, the sender can image the commodity and send an image signal thereof.

In order to achieve the above object, a method for using a portable information terminal according to a ninth aspect of the present invention is characterized in that the surrounding view to be imaged by the image-pickup device shows the surrounding view of the meeting place, whereby even if there is no guide indicating where the sender is or if streets are complicated and explanation thereof is difficult for the sender, the sender can easily inform the receiver whom the sender is meeting of the location where the sender is and, in particular, this method becomes very effective when it is difficult to only vocally explain the place and the like or when the sender is poor at explanation.

### BRIEF DESCRIPTION OF THE DRAWINGS

Fig. 1 is a front view illustrating a portable telephone according to an example of the present invention, with the open/close cover being closed.
Fig. 2 is a front view illustrating the portable telephone of the present invention with the open/close cover being opened.
Fig. 3 is a block diagram illustrating the control portion of the portable telephone of the present invention.
Fig. 4 is an explanatory view illustrating an arrangement of application windows according to the embodiment of the present invention.
Figs. 5A through 5F are explanatory views illustrating various examples of application windows according to the embodiment of the present invention.
Fig. 6 is an explanatory conceptual view illustrating the display form of application windows according to the embodiment of the present invention.
Fig. 7 is an explanatory conceptual view illustrating the form of application windows according to the embodiment of the present invention.
Fig. 8 is an explanatory view illustrating the concept of the arrangement of the input edit window of each application according to the embodiment of the present invention.
Fig. 9 is a block diagram showing an embodiment of the monitoring camera device according to the present invention.
Fig. 10 is a flowchart showing the main routine of the window display control to be performed by the control portion according to the embodiment of the present invention.
Fig. 11 is a view showing a window example displayed in the display panel of the portable telephone according to the embodiment of the present invention.
Fig. 12 is an explanatory view showing an image example showing the surrounding view displayed in the portable information terminal of the present invention.

### DETAILED DESCRIPTION OF THE PREFERRED EMBODIMENTS

Now, an preferred embodiment of the present invention will be explained below in detail with reference to the accompanying drawings.

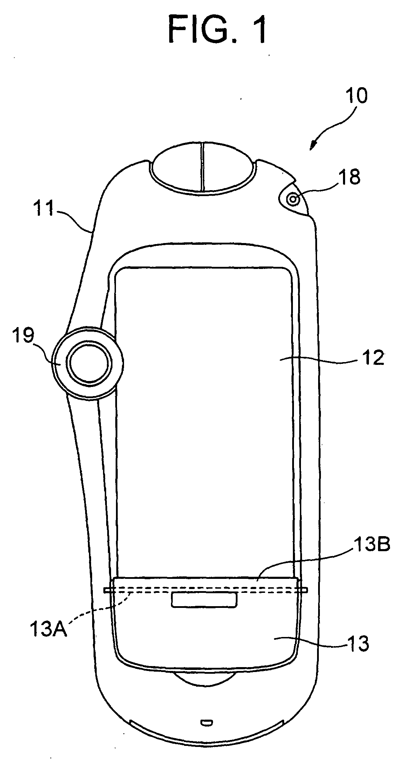

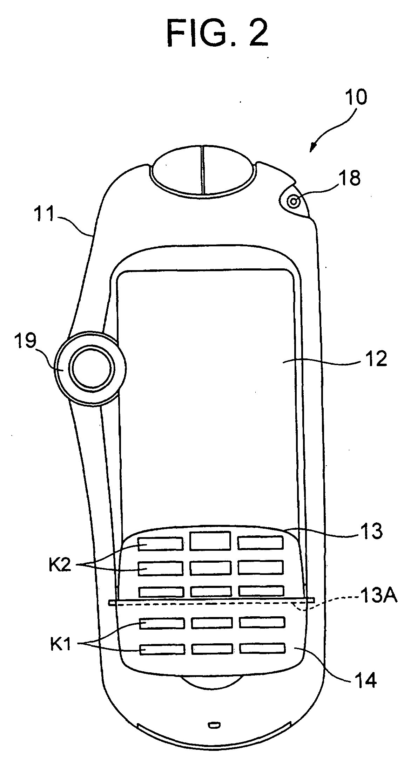

Fig. 1 is a front view illustrating a portable telephone according to the present invention, and Fig. 2 is a front view illustrating a form of the portable telephone when operated.

Referring to Figs. 1 and 2, a portable telephone 10 has a display panel 12 arranged at the central portion of the surface of a main body casing 11, and an open/close cover 13 disposed at the lower portion of the display panel 12.

The open/close cover 13 is rotatably attached vertically at the upper end portion thereof to the main body casing 11 by means of an axle 13A, which is parallel to the lower end rim of the display panel 12.

In addition, there is provided a control panel 14 on the portion to be covered with the open/close cover 13 of the main body casing 11. As shown in Fig. 2, on the surface of the control panel 14, there are arranged first operation keys K1 such as telephone number input keys and function keys. Moreover, on the reverse side of the open/close cover 13 (which is the front side when the cover is opened), there are arranged second operation keys K2.

There is provided a CCD camera 18 on the upper right portion of the main body casing 11 as shown in the figures. There is also provided a spectrum dial 19 on the left such as for switching the display windows of the display panel 12.

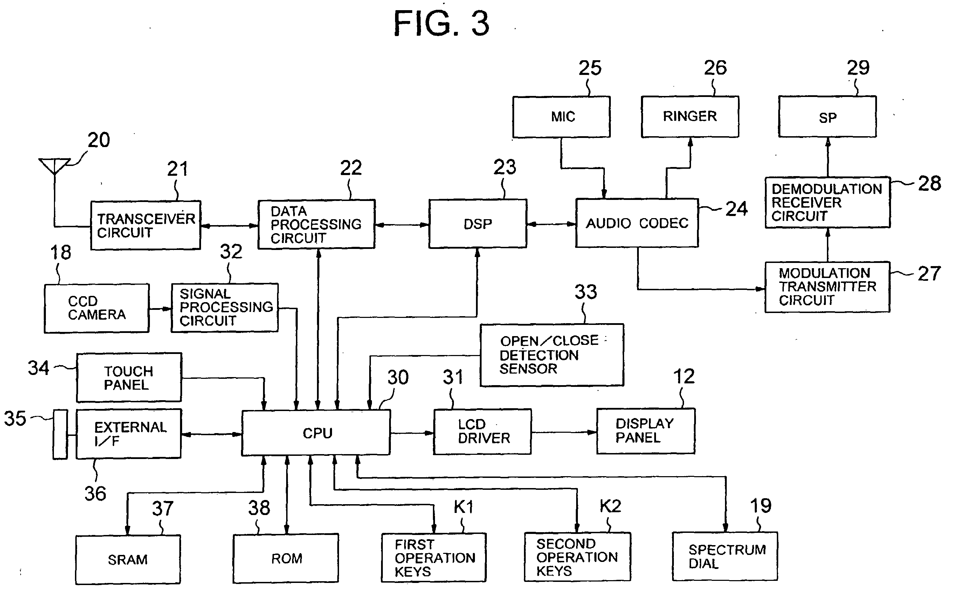

Fig. 3 is a block diagram illustrating an example of the configuration of the control portion of the portable telephone 10.

Referring to Fig. 3, an antenna 20 attached to the main body casing 11 of the portable telephone 10 is successively connected with a transceiver circuit 21, a data processing circuit 22, and a high-speed processing microprocessor or a digital signal processor (DSP) 23. Here, the data processing circuit 22 performs clock control on the image and audio signals received by the transceiver circuit 21 and serves as an interface to a CPU, described later.

The DSP 23 is connected with an audio codec 24. The audio codec 24 is connected with a microphone 25 and a ringer 26. In addition, the audio codec 24 is connected with a loudspeaker 29 via a modulation transmitter circuit 27 and a demodulation receiver circuit 28.

The data processing circuit 22 and the DSP 23 are connected to the CPU 30.

In addition, the CPU 30 is connected with the display panel 12 via a LCD driver 31, the CCD camera 18 via a signal processing circuit 32, and an open/close detection sensor 33 which is attached to the open/close portion of the open/close cover 13 to detect the opened or closed status of the open/close cover 13. The CPU 30 is also connected with a touch panel 34 attached to the display panel 12. Via an external I/F 36, connected to the CPU 30 is a connector 35 which is connected to a personal computer or the like and through which various data is communicated to and from the personal computer or the like. The CPU 30 is also connected with a SRAM 37 in which various personal data are stored such as abbreviated telephone numbers to be inputted by the user. The CPU 30 is further connected with a ROM 38 in which various control programs for the portable telephone are stored. The CPU 30 is also connected with the spectrum dial 19, and the first operation keys K1 and the second operation keys K2, which contain various operation keys such as function keys and a ten-key pad for use in inputting telephone numbers.

The control portion of the portable telephone 10 allows the transceiver circuit 21 to receive a radio wave through the antenna 20. Then, the data processing circuit 22 separates the radio waves into an image signal and an audio signal. While being subjected to clock control, the image signal is outputted to the CPU 30 and the audio signal is outputted to the DSP 23 each in accordance with a command from the CPU 30.

The audio signal inputted to the DSP 23 is subjected to audio processing in the DSP 23 and then inputted to the audio codec 24 for D/A conversion. Then, the resulting signal is outputted to the loudspeaker 29 via the modulation transmitter circuit 27 and the demodulation receiver circuit 28 as well as to the ringer 26.

On the other hand, the audio signal inputted from the microphone 25 is subjected to A/D conversion in the audio codec 24. Then, the resulting signal is transmitted from the antenna 20 via the DSP 23, the data processing circuit 22, and the transceiver circuit 21.

The CPU 30 allows the various control programs of the portable telephone stored in the ROM 38 to control the operation of the data processing circuit 22, the DSP 23, the LCD driver 31 and the like.

That is, in accordance with an operation signal from the first operation keys K1 or the second operation keys K2, the CPU 30 will read a control program corresponding to the operation signal from the ROM 38. Then, in accordance with the control program that has been read, the CPU 30 will output image data of an operation window to the LCD driver 31 to allow the display panel 12 to display the operation window. In addition, the CPU 30 controls the operation of the data processing circuit 22 and the DSP 23, reads data from or writes data to the SRAM 37, and communicates data with the personal computer or the like to which the connector 35 is connected.

Furthermore, when a display window has been switched over to a new window through the spectrum dial 19, the CPU 30 reads corresponding image data read from the ROM 38 and then outputs the resulting data to the LCD driver 31, thereby allowing the new window to appear on the display panel 12.

Furthermore, upon picking-up of an image by means of the CCD camera 18, the CPU 30 will receive the image signal which is sent from the CCD camera 18 and processed in the signal processing circuit 32. Then, the CPU 30 outputs the image signal to the LCD driver 31, thereby allowing the resulting image to appear on the display panel 12.

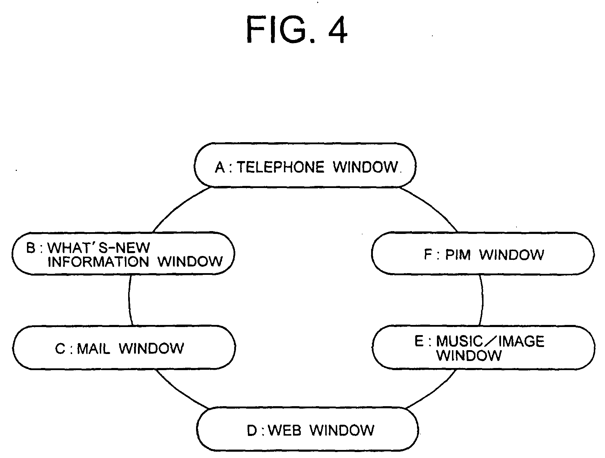

In this example, the portable telephone 10 is equipped with six applications: telephone, what's-new, mail, Web, music/image, and PIM (Personal Information Manager) applications. As shown in Fig. 4, successively displayed on the display panel 12 through the operation of the spectrum dial 19 are a telephone window A, a what's-new window B, a mail window C, a Web window D, a music/image window E, and a PIM window F, corresponding to each of the applications.

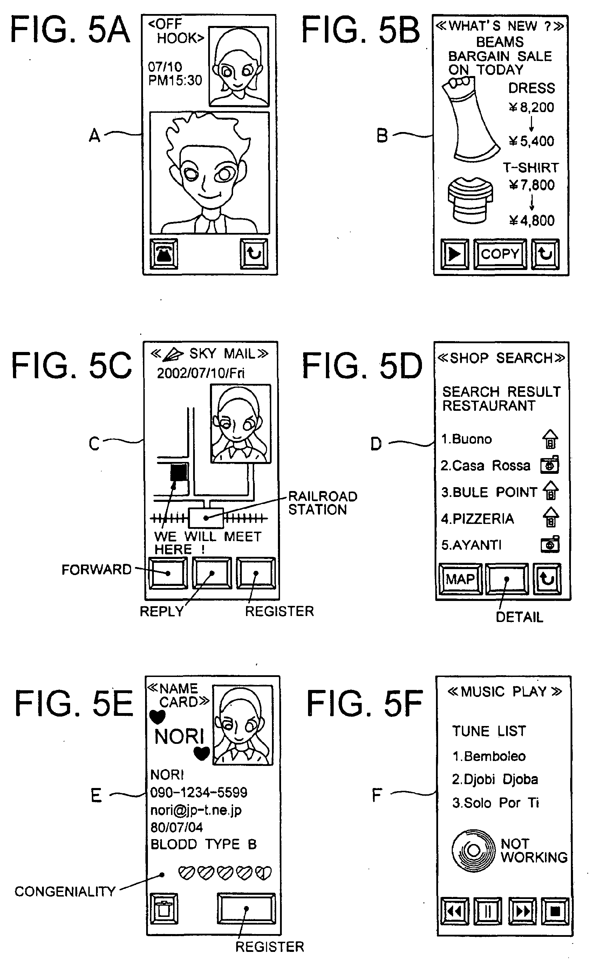

Fig. 5A shows an example of the telephone window A to be displayed on the display panel 12, Fig. 5B shows an example of the what's-new window B, Fig. 5C shows an example of the mail window C, Fig. 5D shows an example of the Web window D, Fig. 5E shows an example of the music/image window E, and Fig. 5F shows an example of the PIM window F.

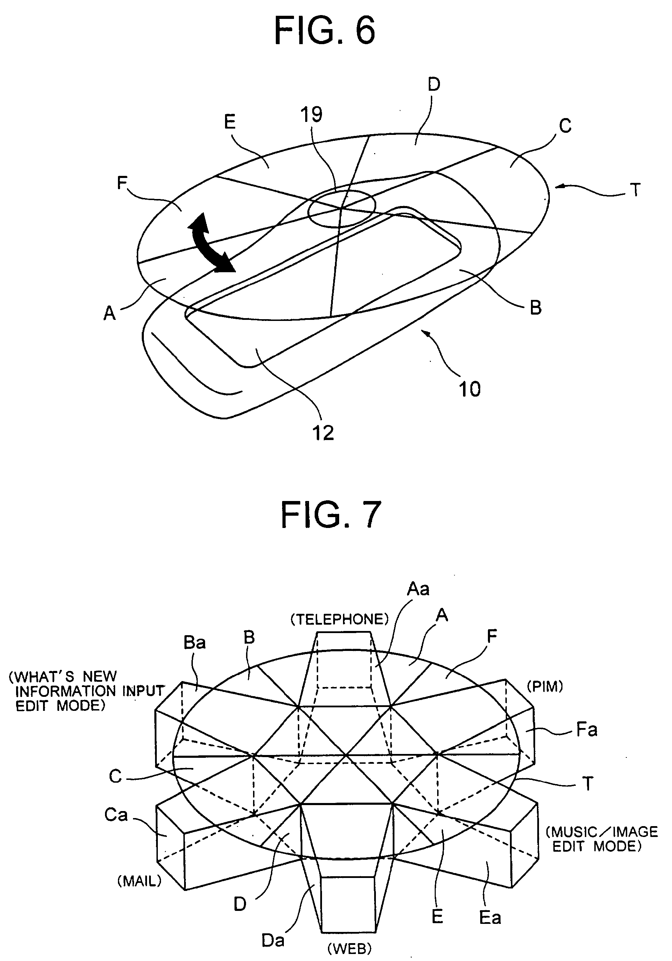

Fig. 6 is a conceptual view illustrating the window image of each of the application windows A to F to be displayed on the display panel 12.

That is, the display windows A to F are conceptually each assigned to each of the six regions which are provided by radially dividing a disc T with its center at the spectrum dial 19, the display windows A to F being arranged as shown in Fig. 4. A rotational operation of the spectrum dial 19 allows the disc T to rotate about the spectrum dial 19, causing the display windows A to F on the disc T to appear successively on the display panel 12.

Incidentally, each of the regions divided radially on the disc T is provided with its own color, whereby each of the windows A to F is displayed on the display panel 12 in a different background color from any one of the other regions.

In addition, each of the display windows A to F is provided spatially with contents Aa to Fa corresponding to each application as conceptually expressed in Fig. 7.

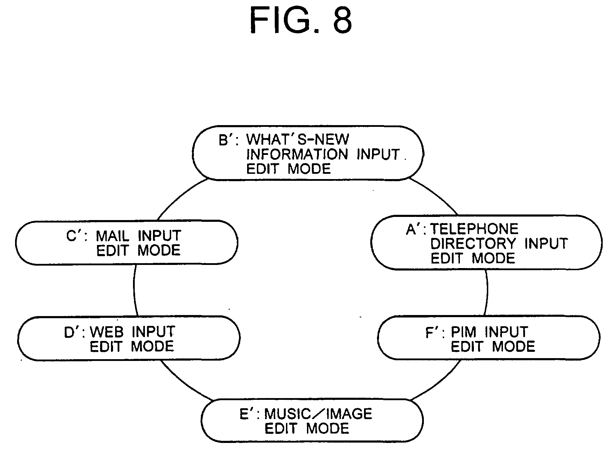

Furthermore, each of the applications is provided with each input edit window A' to F', which is to be displayed through a mode change in place of the windows A to F as shown in Fig. 8.

A program stored in the ROM 38 of the control part (refer to Fig. 3) organizes the display form of the windows A to F and the input edit window A' to F' on the display panel 12, and the contents Aa to Fa each corresponding to each of the applications.

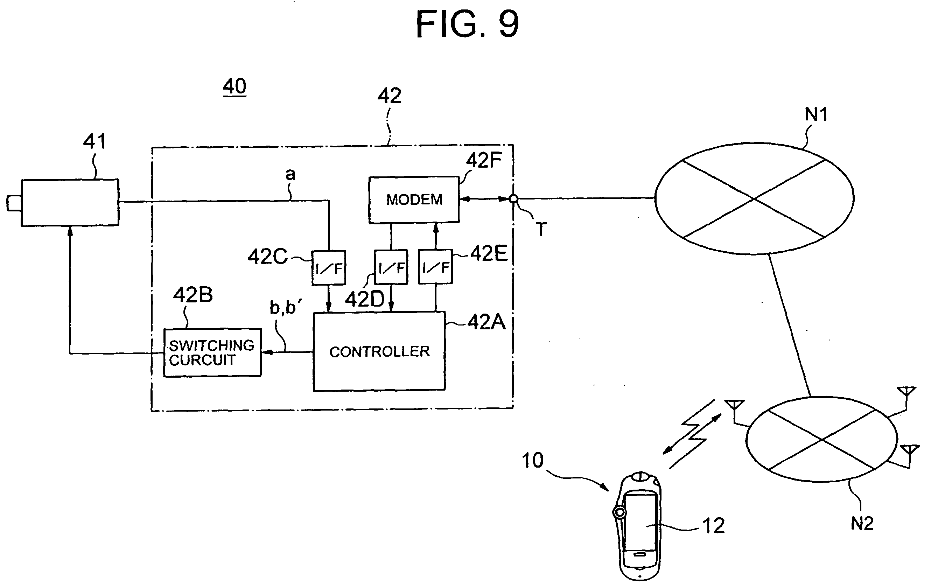

Fig. 9 is a block diagram showing an embodiment of the monitoring camera device used in a remote monitoring system by means of a portable telephone according to the present invention.

This monitoring camera device is to be installed at an arbitrary place such as a user's house where remote monitoring is performed.

In this Fig. 9, a monitoring camera device 40 comprises a CCD camera 41 and a controller unit 42 for said CCD camera 41.

The controller unit 42 comprises a CPU(controller)42A which supervises ON/OFF control of the CCD camera 41 and signal processing control of an image signal to be outputted from said CCD camera 41, a switching circuit 42B which switches on/off a CCD camera 41 by means of ON/OFF instruction signals b and b' (which will be described later) outputted from the CPU 42A, an interface 42C which makes an input signal a to be outputted from the CCD camera 41 input into the CPU 42A, and a modem 42F which is connected to a line connecting terminal T, demodulates a communication signal to be inputted from the portable telephone 10 and inputs the modulated communication signal into the CPU 42A via an input side interface 42D, and modulates an image signal to be outputted from the CPU 42A via an output side interface 42E and outputs to the line connecting terminal T (which will be described later).

The monitoring camera device 40 is installed in a desirable place such as a user's house and the like in a manner where the CCD camera 41 is oriented toward the position of an object to be monitored and the line connecting terminal T of the controller unit 42 is connected to a public telephone network N1.

Then, in this monitoring camera device 40, when a calling signal is inputted from the portable telephone 10 into the line connecting terminal T via a mobile communication network N2 and the public telephone network N1, the modem 42F opens the connection line to the CPU 42A, demodulates a tone signal indicating a password to be inputted subsequently to the calling signal, and inputs the demodulated tone signal into the CPU 42A via the input side interface 42D.

A password which has been set by a user beforehand and comprises a combination of tone signals has been memorized in the CPU 42A and based on the comparison of this set password with a password indicated by the tone signal to be inputted from the modem 42F, when the set password and the password indicated by the tone signal coincide, the ON instruction signal b is outputted from the CPU 42A to the switching circuit 42B and when the set password and the password indicated by the tone signal do not coincide, the line connection between the CPU 42A and modem 42F is disconnected.

When the ON instruction signal b is inputted from the CPU 42A, the switching circuit 42B turns on the power supply of the CCD camera 41 and starts imaging by means of the CCD camera 41.

Then, while the CPU 42A is line-connected to the public telephone network N1 via the modem 42F, this switching circuit 42B maintains the condition where the power supply of the CCD camera 41 is ON.

Thus, imaging by means of the CCD camera 41 starts and the image signal a to be obtained through the imaging is inputted into the CPU 42A via the interface 42C.

This image signal a is processed by compressing in accordance with a predetermined moving image compressing program in the CPU 42A, then outputted to the modem 42F via the output side interface 42E, further subjected to signal modulation processing in this modem 42F, and then outputted as a digital image signal from the line connection terminal T to the public telephone network N1.

Herein, when the portable telephone 10, which accesses the monitoring camera device 40 via the public telephone network N1 and the mobile communication network N2, disconnects the line connection to this monitoring camera device 40, the CPU 42A outputs the OFF instruction signal b' to the switching circuit 42B and turns off the power supply of the CCD camera 41.

Now, an explanation will be given to the operating procedures and actions in the portable telephone 10 when the portable telephone 10 accesses the monitoring camera device 40 and receives a monitored image from said monitoring camera device 40.

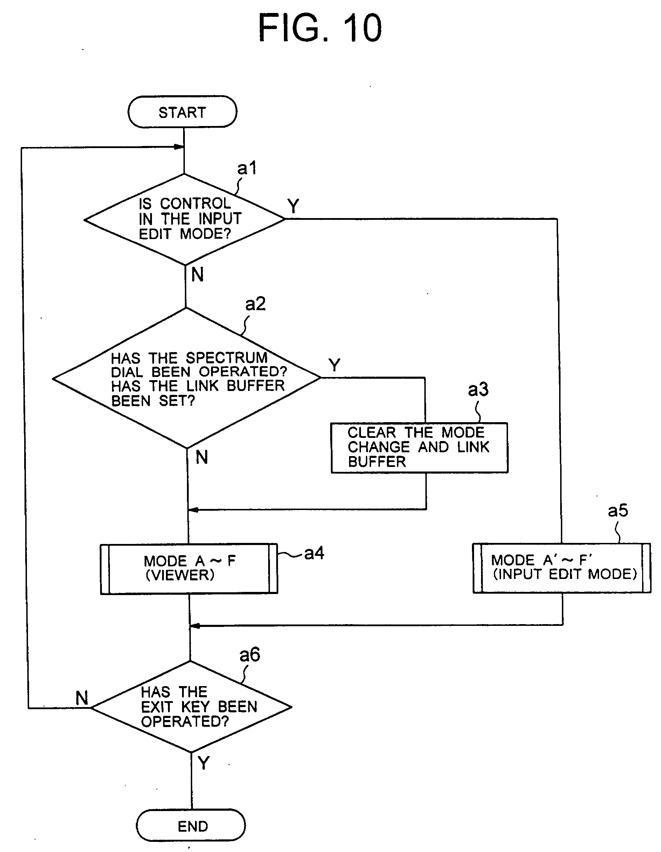

Fig. 10 is a flowchart showing the main routine for the mode change (the selection of an application) of the portable telephone 10.

Referring to Fig. 10, the CPU 30 (refer to Fig. 3) determines if control is in the input edit mode (step a1). If control is not in the input edit mode, it is then determined if the spectrum dial 19 has been operated and a link buffer has been set to the application that is to be selected through the operation of the spectrum dial 19 (step a2).

In the step a2, if the spectrum dial 19 has been operated, the mode is switched over to the application that has been selected by the operation of the spectrum dial 19. In addition, if the link buffer has been set to the selected application, the buffer link is cleared (step a3).

Then, control proceeds to the viewer mode subroutine of each application (step a4).

In the step a2, if the spectrum dial 19 has not been operated, control proceeds to the subroutine of step a4 in the viewer mode of the application that has been selected in the previous operation.

On the other hand, in step a1, if control is in the input edit mode, control proceeds to the subroutine in the input edit mode of the application that has been selected in the previous operation (step a5).

Then, it is determined if the exit key has been inputted (step a6). If the exit key has not been inputted, control repeats the procedure from the aforementioned step al. If the exit key has been inputted, control exits the viewer mode or the input edit mode of the selected application.

In the mode changing operation of this portable telephone 10, when a user accesses the monitoring camera device 40 installed in the user's house or the like, control selects the viewer mode of the telephone application so that the telephone window A is displayed on the display panel 12 of the portable telephone 10.

Then, when a telephone number set in the monitoring camera device 40 is inputted by operation of the ten-key pad arranged in the first operation keys K1 and the second operation keys K2, the CPU 30 transmits a calling signal based on the inputted telephone number from the antenna 20 via the data processing circuit 22 and transceiver circuit 21 (refer to Fig. 3).

This calling signal is inputted into the line connecting terminal T (refer to Fig. 9) via the mobile communication network N2 and the public telephone network N1.

Then, the calling signal from this portable telephone 10 is inputted into the modem 42F via the line connecting terminal T and when the telephone line between the modem and the portable telephone 10 is started, the user operates the input keys arranged in the first operation keys K1 and the second operation keys K2 and inputs the password that has been set in the monitoring camera device 40 in advance.

Similarly to the calling signal, the tone signal indicating this password is inputted into the modem 42F and the modem 42F inputs this tone signal into the CPU 42A via the input side interface 42D.

As described above, the CPU 42A compares the password indicated by the tone signal to be inputted with the password that has been set by the user beforehand and when the set password and the password indicated by the tone signal coincide, the CPU 42A outputs the ON instruction signal b to the switching circuit 42B and makes the switching circuit 42B turn on the power supply of the CCD camera 41.

When imaging of the object to be monitored is started by the CCD camera 41 whose power supply has been turned on and the image signal a thereof is inputted into the CPU 42A via the interface 42C, signal processing such as compression is performed in this CPU 42A, the image signal is further inputted into the modem 42F via the output side interface 42E and signal modulating processing is performed, and the signal is transmitted from the line connecting terminal T to the portable telephone 10 via the public telephone network N1 and the mobile communication network N2.

The portable telephone 10, which received the digital image signal, that has been thus transmitted from the monitoring camera device 40, by the antenna 20 and the transceiver circuit 21 demodulates this digital image signal in the data processing circuit 22 and inputs the demodulated digital signal into the CPU 30 while performing clock control.

Herein, if an audio signal is included in the digital image signal, the audio signal is separated in this data processing circuit 22, inputted into the DSP 23, and outputted from the speaker 29 of the portable telephone 10 as mentioned above.

The demodulated image signal, that has been inputted into the CPU 30, is decompressed in accordance with the compressing/decompressing program, that has been read out from the ROM 38, and then outputted to the LCD driver 31.

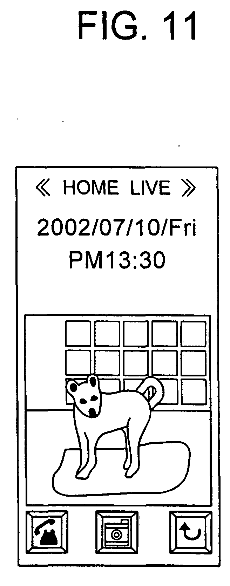

Then, based on the image signal to be inputted, the LCD driver 31 makes the display panel 12 display an image, for example, as shown in Fig. 11 obtained through imaging of the object to be monitored.

Thus, by means of the portable telephone 10, the user can see the image obtained by imaging a state of the user's house in real time.

In addition, since it is necessary to input the password set by the user to access the monitoring camera device 40, there is no danger that the others see the state of the user's house and the user's privacy is protected.

An example of the portable information terminal according to the present invention is the portable telephone 10 that has been described by means of Figs. 1 to 8 and Fig. 10, therefore, the description thereof will not be repeated.

In the ROM 38 of the portable telephone, the SRAM 37 in which abbreviated dials to be inputted by the user and various personal data such as the name card information and the like are stored, various control programs for the portable telephone, and a congeniality judging program (which will be described later) have been recorded.

Now, an explanation will be given to the operating procedures when a view of the surroundings is sent by the above portable telephone 10 to another portable telephone 10 which is line-connected and actions of the portable telephone 10 of the same time.

In terms of the mode changing operation as shown in Fig. 10 of this portable telephone 10, in a case where a user wants to inform the receiver of the place where the user is when they are meeting, the user operates the spectrum dial 19 to change the viewer mode to the telephone window A and operates the operation keys arranged in the first operation keys K1 and the second operation keys K2 to turn on the CCD camera 18.

Then, in this condition, the user orients the portable telephone 10 toward the surroundings and performs imaging by the CCD camera 18.

An image signal outputted from the CCD camera 18 through the imaging thus performed is subjected to a necessary signal processing by the signal processing circuit 32 as shown in Fig. 3, then it is inputted into the CPU 30, subjected to compressing processing in accordance with the signal compressing program that has been read out from the ROM 38, and then sent, via the data processing circuit 22, the transceiver circuit 21, and the antenna 20, to the receiver's portable telephone 10 that has been line-connected via the mobile communication network.

Then, in the other portable telephone 10 on the receiver's side, the image signal received by means of the antenna 20 and the transceiver circuit 21 is inputted into the CPU 30 via the data processing circuit 22, subjected to decompressing processing in this CPU 30 in accordance with the compressing/decompressing program that has been read out from the ROM 38, and then outputted to the LCD driver 31. By this LCD driver 31, an image showing the surrounding view that has been imaged by the CCD camera 18 of the portable telephone 10 on the sender's side is displayed on the display panel 12.

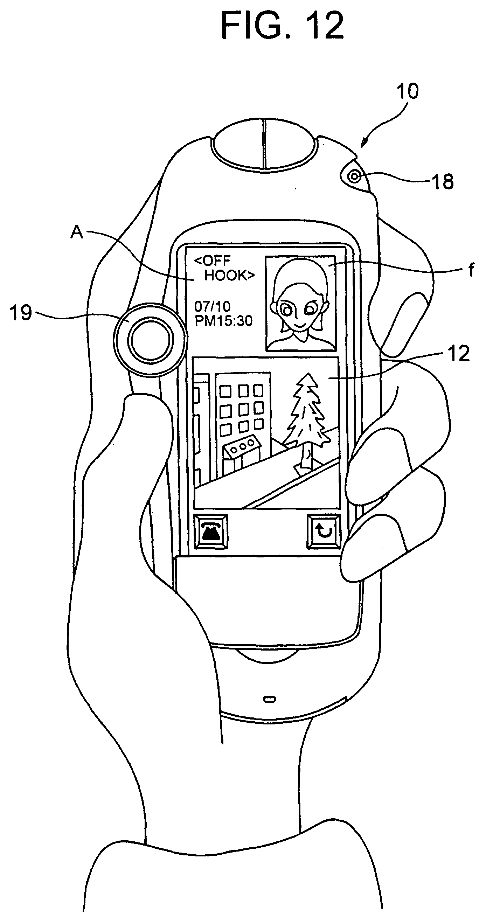

Fig. 12 shows an example of the image display to be displayed within the telephone window A of the display panel 12 of the portable telephone 10 in the above condition.

Referring to Fig. 12, an image f displayed on the upper right of the telephone window A shows a sender's face and the image data for displaying this image f has been stored in the SRAM 37 beforehand and when the line to the sender's portable telephone 10 is connected, this image data is read out from the SRAM 37 by the CPU 30 so as to be displayed.

According to the above portable telephone 10, for example, in a case where friends are meeting in a downtown area, in a condition where the portable telephones 10 which they carry are line-connected to each other via the mobile communication network, one of them who arrives first turns on the CCD camera 18 and images the surrounding view, and sends the image signal to the other's portable telephone, whereby the sender can visually inform the receiver whom the sender is meeting of the location where the sender is.

Accordingly, even if there is no guide indicating where the sender is or if streets are complicated and explanation thereof is difficult for the sender, the sender can easily inform the receiver whom the sender is meeting of the location where the sender is.

In particular, when it is difficult to only vocally explain the place and the like or when the sender is poor at explanation, it becomes very effective to provide the receiver with the above described image.

Furthermore, in addition to the method for using a portable telephone as described above, the above portable telephone 10 can be used in other methods. For example, when a person is involved in an accident, it can be used to image, by the CCD camera 18, the scene of the accident for sending and when a person meets with disaster, it can be used to image the surrounding view for sending so that the receiver confirms the scene of the disaster.

Moreover, the above portable telephone 10 can be used in still another method wherein when the sender wants to talk with the receiver at a distant place about a commodity that the sender wants to buy, the sender can image the commodity by the CCD camera 18 and send the image signal thereof.

## Claims

1. A portable telephone comprising:
a display part which can display a moving image;
an image signal receiving part which receives an image signal sent over a mobile communication network;
an image signal reproducing part which reproduces said image signal which has been received by said image signal receiving part. and makes said display part display a reproduced image; and
a permission signal sending part for sending a permission signal to permit an image-pickup part to output image signal to said image-pickup part to be connected via the mobile communication network.

2. A portable telephone as set forth in Claim 1 further comprises a decompressing part for decompressing a compressed digital image signal which has been received by said image signal receiving part.

3. A remote monitoring system by means of a portable telephone, comprising:
a portable telephone; and
a monitoring camera device which is connected to said portable telephone via a mobile communication network and sends an image signal obtained by imaging, wherein
said portable telephone comprises:
a display part which can display a moving image;
an image signal receiving part which receives an image signal sent over the mobile communication network;
an image signal reproducing part which reproduces said image signal which has been received by said image signal receiving part and makes the display part display a reproduced image; and
a permission signal sending part for sending a permission signal to permit a monitoring camera device to output an image signal to said monitoring camera device to be connected via the mobile communication network, and wherein
said monitoring camera device comprises:
an image pickup part which is installed and oriented toward a desirable object to be monitored and an image signal sending permission part which detects the permission signal to be sent from the permission signal sending part of the portable telephone via the mobile communication network and permits sending of an image signal from said image-pickup part to said portable telephone.

4. A remote monitoring system by means of a portable telephone as set forth in Claim 3, wherein said monitoring camera device further comprises a compressing part for compressing an image signal to be sent from said image pickup part to said portable telephone.

5. A remote monitoring system by means of a portable telephone as set forth in Claim 3, wherein said portable telephone further comprises a decompressing part for decompressing a compressed image signal which has been received by said image signal receiving part.

6. A portable information terminal comprises:
a sending/receiving part which sends/receives an image signal via a mobile communication network;
an image display part which displays an image by said image signal received by said sending/receiving part; and
an image-pickup part which performs imaging and sends an image signal obtained through imaging by means of said sending/receiving part.

7. A portable information terminal as set forth in Claim 6, wherein said image-pickup part is a CCD camera.

8. A method for using a portable information terminal which comprises a sending/receiving part which performs sending/receiving of an image signal via a mobile communication network, an image display part which displays an image in a form of an image signal received by said sending/receiving part, and an image-pickup part which performs imaging and sends image signals obtained through imaging by means of said sending/receiving part, said method comprising the steps of:
imaging a view of a surrounding area by means of said image-pickup device;
sending the image signal obtained through said imaging step to another portable information terminal that is line-connected via a mobile communication network by means of said sending/receiving part; and
making the image of the view of the surrounding area thus imaged to be displayed in an image display part of another portable information terminal.

9. A method for using a portable information terminal as set forth in Claim 8, wherein
said view of a surrounding area to be imaged by said image-pickup device is a view of a surrounding area of a place of meeting.
